# EUROPEAN PATENT SPECIFICATION

(11) **EP 3 803 906 B1**
(45) Date of publication and mention of the grant of the patent: **12.02.2025**
(21) Application number: 19811120.5
(22) Date of filing: 29.05.2019
(51) Int. Cl.: G21F 9/12, G21C 19/42, G21C 19/44, G21C 3/54, G21C 19/307, G21C 19/50

(54) **ELECTROCHEMICAL SEPARATION MECHANISM IN A MOLTEN SALT REACTOR**
ELEKTROCHEMISCHER TRENNMECHANISMUS IN EINEM SALZSCHMELZREAKTOR
MÉCANISME DE SÉPARATION ÉLECTROCHIMIQUE DANS UN RÉACTEUR À SEL FONDU

(30) Priority: 30.05.2018 US 201862678235 P
(43) Date of publication of application: 14.04.2021
(73) Proprietor: Alpha Tech Research Corp, Salt Lake City, UT 84101 (US)
(72) Inventor: BENSON, John, Pleasant Grove, UT 84062 (US); MEMMOTT, Matthew, Provo, UT 84604 (US)
(74) Representative: Haseltine Lake Kempner LLP
(86) International application number: PCT/US2019/034279
(87) International publication number: WO 2019/231971

(56) References cited:
- JP-A- 2006 213 972
- JP-A- 2006 213 972
- US-A1- 2004 045 835
- US-A1- 2016 189 806
- US-A1- 2017 294 241
- US-A1- 2017 294 241

## Description

### BACKGROUND

A molten salt reactor is a class of nuclear fission reactor in which the primary nuclear reactor coolant or the fuel is a molten salt mixture. Often molten salt reactors run at higher temperatures than water-cooled reactors and, therefore, can produce a higher thermodynamic efficiency while staying at low vapor pressure. In addition, molten salt reactors can produce interesting and useful fission byproducts products.

US 2017/0294241 discloses a molten salt reactor comprising a reactor vessel and a molten salt contained within the reactor vessel. A corrosion reduction unit is configured to process the molten salt to maintain an oxidation reduction ratio at a substantially constant level.

JP 2006-213972 describes a scraping blade for scraping and collecting a target element deposited on a cylindrical electrode.

### SUMMARY

Some embodiments of the invention include an chemical separation mechanism for a molten salt reactor; the molten salt in the reactor may include some fission products. In some embodiments, the chemical separation mechanism may include a molten salt receptacle with a molten salt disposed within, a solvent receptacle having a solvent disposed within; an electrode; and an electrode mechanism. The electrode mechanism is configured to submerse the electrode into the molten salt receptacle such that a chemical reaction occurs between the electrode and one or more of the fission products in the molten salt. In some embodiments, the electrode mechanism may submerse the electrode into the solvent receptacle such that a chemical reaction occurs resulting in one or more of the fission products being deposited into the solvent.

In some embodiments, the electrode mechanism comprises a raise and swivel gantry. In some embodiments, the electrode mechanism comprises a raise and slide electrode mechanism.

In some embodiments, the chemical separation mechanism may include a power source configured to place an electrical potential on the electrode(s).

In some embodiments, the molten salt comprises an actinide bearing salt, and wherein the electrode does not react with the actinides within the actinide bearing salt. In some embodiments, the molten salt comprises an actinide bearing salt. In some embodiments, the molten salt comprises a fluoride or chloride salt.

In some embodiments, the fission products may be plated on the electrode when the electrode is placed within the molten salt receptacle.

In some embodiments, the electrode may include uranium. In some embodiments, the electrode may include an actinide.

In some embodiments, the chemical separation mechanism may include a second electrode disposed within or in contact with the molten salt within the molten salt receptacle. In some embodiments, the second electrode may be disposed within or in contact with the solvent within the solvent receptacle.

In some embodiments, the chemical separation chamber encloses a noble gas.

The invention includes a method as set out in claim 15. A chemical reaction occurs between the electrode and one or more of the fission products in the molten salt; removing the electrode to the molten salt; and exposing the electrode to a solvent such that a chemical reaction occurs resulting in one or more of the fission products being deposited into the solvent. The method may also include removing the electrode from the solvent. In some embodiments, the method may include providing an electric potential to the electrode while the electrode is exposed to the molten salt. In some embodiments, the method may include providing an electric potential to the electrode while the electrode is exposed to the solvent.

In some embodiments, exposing the electrode to the molten salt comprises operating a raise and swivel gantry. In some embodiments, exposing the electrode to a molten salt comprises operating a raise and slide electrode mechanism.

In some embodiments, the molten salt comprises an actinide bearing salt, and the electrode does not react with the actinides within the actinide bearing salt. In some embodiments, the molten salt comprises an actinide bearing salt.

In some embodiments, the electrode may include uranium.

### BRIEF DESCRIPTION OF THE FIGURES

These and other features, aspects, and advantages of the present disclosure are better understood when the following Detailed Description is read with reference to the accompanying drawings.
FIG. 1 is a diagram of a molten salt reactor system according to some embodiments.
FIG. 2 is a diagram of a chemical separation subsystem according to some embodiments.
FIG. 3 is a diagram of a chemical separation subsystem with the electrode in a raised position within the chemical separation chamber according to some embodiments.
FIG. 4 is a diagram of a chemical separation subsystem with the electrode in a lowered position and disposed within the solvent pool according to some embodiments.
FIG. 5 is a diagram of a chemical separation subsystem according to some embodiments.
FIG. 6 is another diagram of a chemical separation subsystem according to some embodiments.
FIG. 7 is a flowchart representing a process of using an electrode to remove fission products from a molten salt reactor according to some embodiments.

### DETAILED DESCRIPTION

Some embodiments of the disclosure include an chemical separation mechanism that includes a molten salt receptacle and a solvent receptacle. The molten salt receptacle includes or contains a molten salt having fission products. The solvent receptacle may include or contain a solvent. The chemical separation mechanism includes an electrode and an electrode mechanism configured to submerse the electrode into the molten salt receptacle and optionally submerse the electrode into the solvent receptacle. The electrode mechanism may include any type of electro-mechanical electrode mechanisms or electronics to move the electrode from various positions. The electrode may react or bond with some of the fission products in the molten salt in the molten salt receptacle. The electrode may react or bond with the solvent in the solvent receptacle such that fission products bonded with the electrode can be deposited or released into the solvent.

A chemical separation mechanism can be utilized in any type of molten salt system or device including, but not limited to, thermal spectrum nuclear reactors, fast spectrum nuclear reactors, epithermal spectrum nuclear reactors, molten salt test loops, molten salt targets, molten salt neutron sources, etc. In some embodiments, the solvent comprises Ethylene Glycol. In some embodiments, the solvent comprises choline chloride.

In some embodiments, the chemical separation mechanism can include a raise and swivel gantry or a raise and slide electrode mechanism to move the electrode from one position to another. Various other robotic or electro-mechanical devices may be used.

Systems and methods are disclosed for electrochemical separation in a molten salt chamber. A molten salt reactor may be a nuclear fission reactor in which the primary nuclear reactor coolant, or even the fuel itself, is a molten salt mixture. In some embodiments, molten salt reactors can run at higher temperatures than water-cooled reactors for a higher thermodynamic efficiency, while staying at low vapor pressure. In some embodiments, the fuel in a molten salt reactor may include a molten mixture of fluoride salts (e.g., lithium fluoride and beryllium fluoride (FLiBe)) with dissolved uranium (U-235 or U-233) fluorides (UF₄). In some embodiments, the uranium may be low-enriched uranium, unenriched uranium, or enriched uranium.

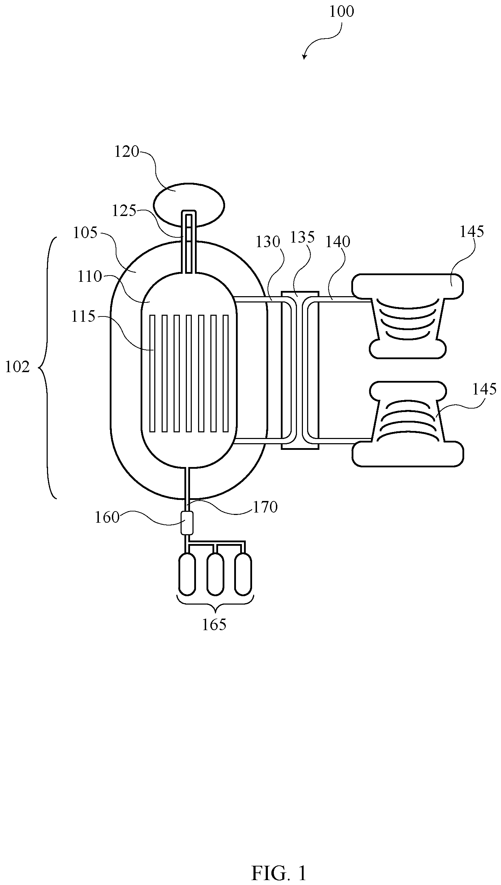

FIG. 1 is a diagram of a molten salt reactor system 100 according to some embodiments. The molten salt reactor system 100 may include a reactor 102, a chemical separation subsystem (e.g., including a chemical separation chamber 120), safety systems (e.g., including one or more emergency dump tanks 165), and turbines 145.

The reactor 102 may include any type of molten salt fission device or system whether or not it includes a reactor. The reactor 102 may include a liquid-salt very-high-temperature reactor, a liquid fluoride thorium reactor, a liquid chloride thorium reactor, a liquid salt breeder reactor, a liquid salt solid fuel reactor, a high flux water reactor with a high or low enriched uranium-salt target etc.

The molten salt reactor system 100, for example, may employ one or more molten salts with a fissile material. The molten salt, for example, may include any salt comprising fluorine, chlorine, lithium, sodium, potassium, beryllium, zirconium, rubidium, etc., or any combination thereof. Some examples of molten salts may include LiF, LiF-BeF₂, 2LiF-BeF₂, LiF-BeF₂-ZrF₄, NaF-BeF₂, LiF-NaF-BeF₂, LiF-ZrF₄, LiF-NaF-ZrF₄, KF-ZrF₄, RbF-ZrF₄, LiF-KF, LiF-RbF, LiF-NaF-KF, LiF-NaF-RbF, BeF₂-NaF, NaF-BeF₂, LiF-NaF-KF, etc. In some embodiments, the molten salt may include sodium fluoride, potassium fluoride, aluminum fluoride, zirconium fluoride, lithium fluoride, beryllium fluoride, rubidium fluoride, magnesium fluoride, and/or calcium fluoride

In some embodiments, the molten salt may include any of the following possible salt eutectics. Many other eutectics may be possible. The following list also includes molar ratios and the melting point of the example eutectics. The molar ratios are examples only. Various other eutectics may be used.
- LiF-NaF (60-40 mol%) 652 °C
- LiF-KF (50-50 mol%) 492 °C
- LiF-NaF-KF (46.5-11.5-42 mol%) 454 °C
- LiF-NaF-CaF₂ (53-36-11 mol%) 616 °C
- LiF-NaF-MgF₂-CaF₂ (~50-~30-~10-~10 mol%) -600 °C
- LiF-MgF₂-CaF₂ (~65-~12-~23 mol%) 650-725 °C
- LiF-BeF₂ (66.5-33.5 mol%) 454 °C
- NaF-BeF₂ (69-31 mol%) 570 °C
- LiF-NaF-BeF₂ (15-58-27) 480 °C
- LiF-NaF-ZrF₄ (37-52-11) 604 °C
- LiF-ThF₄ (71-29) 565 °C
- NaF-ThF₄ (77.5-22.5) 618 °C
- NaF-ThF₄ (63-37) 690 °C
- NaF-ThF₄ (59-41) 705 °C
- LiF-UF4 (73-27) 490 °C
- NaF-UF₄ (78.5-21.5) 618 °C
- LiF-NaF-UF₄ (24.3-43.5-32.2) 445 °C

The reactor 102 may include a reactor blanket 105 that surrounds a reactor core 110. A plurality of rods 115 may be disposed within the reactor core 110. The reactor core 110, for example, may include a Uranium rich molten salt such as, for example, UF₄-FLiBe. The reactor blanket 105 may include a breeding fuel that can produce Uranium for the reactor core 110. The reactor blanket 105 may include a thorium rich fluoride salt. For example, the reactor blanket 105 may include thorium-232, which through neutron irradiation becomes thorium-233. Thorium-233 has a half-life of 22 minutes and through beta decay becomes protactinium-233. Then, through a second beta decay protactinium-233, which has a half-life of 26.97 days, becomes uranium-233, which is additional fuel for the reactor core 110.

The rods 115 may include any material that may act as a neutron energy moderator such as, for example, graphite, ZrHₓ, light water, heavy water, beryllium, lithium-7, etc. The neutron energy moderator may be selected or not used at all based on the desire for a thermal, epithermal, or fast spectrum neutrons within the reactor core 110.

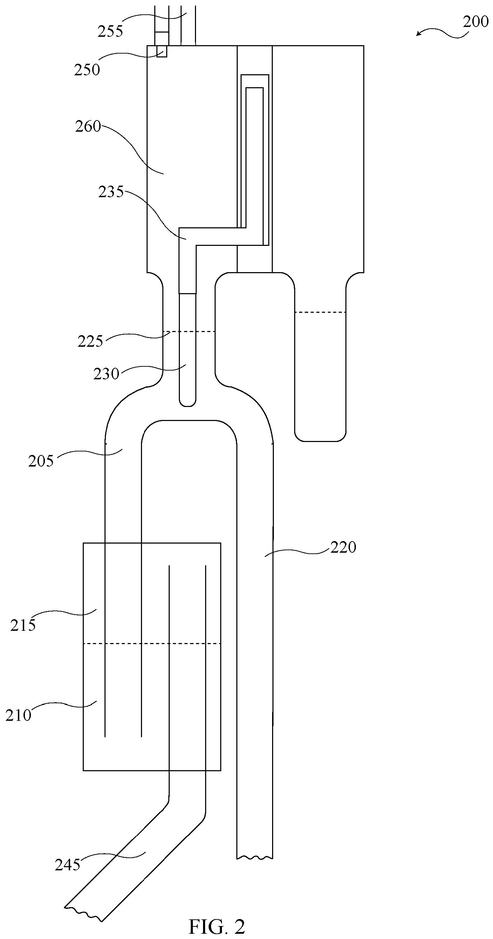

In some embodiments, the molten salt reactor system 100 may include a chemical separation subsystem. The chemical separation subsystem, for example, may include a chemical separation chamber 120 and/or a chemical separation loop 125. The chemical separation subsystem, for example, may be used to extract fission products (e.g., molybdenum, ruthenium ) from the molten salt and purify the fission products. A list of fission products can be found, for example, at https://www-nds.iaea.org/wimsd/fpyield.htm#T1 and/or at https://www-nds.iaea.org/wimsd/fpyield.htm#T2. Other fission products may be included. The chemical separation subsystem, for example, may remove fission products without removing actinides (e.g., Uranium isotopes such as, for example, Uranium 233, Uranium 235; or Plutonium isotopes such as, for example, Plutonium 239; or Thorium isotopes; etc.) from the reactor core. FIG. 2, 3, and 4 illustrate examples of a chemical separation subsystem.

The safety subsystem may include an emergency dump conduit 170, a freeze plug 160, or one or more emergency dump tanks 165. The emergency dump tanks 165 are connected with the reactor core 110 via the emergency dump conduit 170. The freeze plug 160 may be an active element that keeps the fissile material within the reactor core 110 unless there is an emergency. If the freeze plug 160, for example, loses power or is otherwise triggered, the dump conduit is opened and the material in the reactor core 110 is dumped into the emergency dump tanks 165. The emergency dump tanks 165 may include materials such as, for example, energy moderating materials. The emergency dump tanks 165, for example, may be placed in a location where any reactions can be controlled. The emergency dump tanks 165, for example, may be sized to preclude the possibility of a sustained reaction.

FIG. 2 is a diagram of a chemical separation subsystem 200 of a molten salt reactor according to some embodiments. The chemical separation subsystem 200 includes a molten salt chemical separation channel 205 that can conduct molten salt from a molten salt chamber (e.g., reactor core 110). The molten salt chemical separation channel 205 may connect with the molten salt loop conduit 220, which may channel molten salt from the molten salt chamber to the molten salt chemical separation channel 205. The molten salt chemical separation channel 205 may feed molten salt into the molten salt reservoir 210, 215. The molten salt reservoir 210, 215 may fill or partially fill with molten salt via the molten salt chemical separation channel 205. In some embodiments, bismuth or other chemicals may be constrained, placed, or disposed within the molten salt reservoir 210, 215 by a membrane or mesh, for example, to chemically remove additional fission products. Molten salt may flow through the molten salt reservoir 210, 215 and return to the molten salt chamber via the molten salt return conduit 245.

In some embodiments, the molten salt surface 225 within the molten salt chemical separation channel 205 may separate the molten salt chemical separation channel 205 and the chemical separation chamber 260. In some embodiments, the chemical separation chamber 260 may be filled with an inert gas or a vacuum that may, for example, keep the molten salt surface 225 from being exposed to unwanted reactions or oxidation.

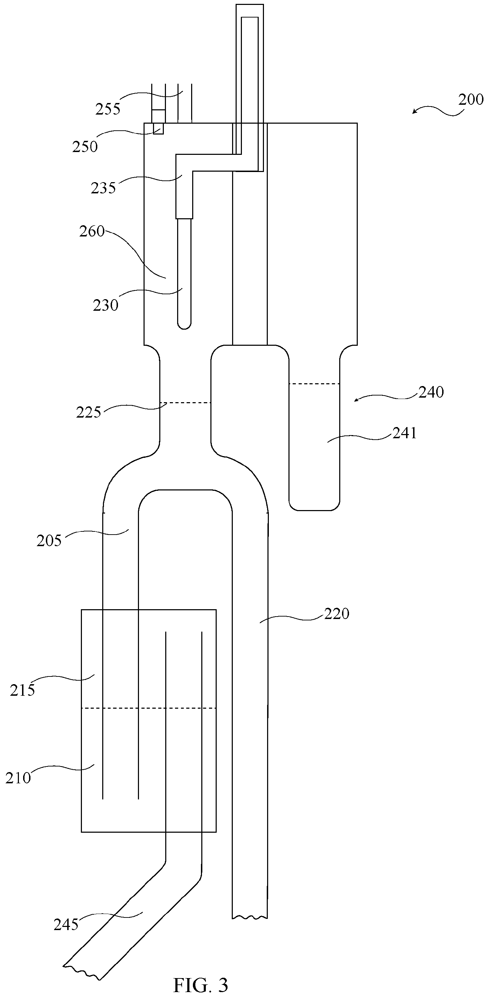

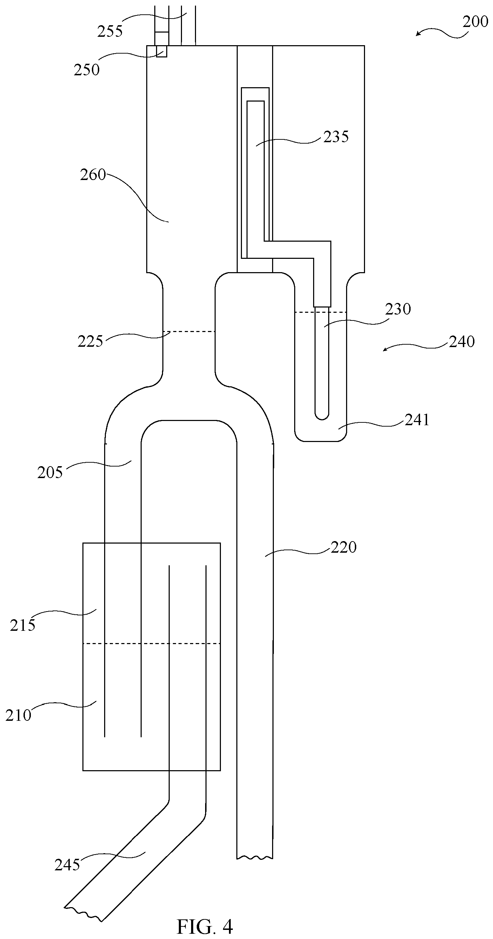

In some embodiments, an electrode 230 is dipped within the molten salt within the molten salt chemical separation channel 205. The electrode 230 may include actinide such as, for example, Uranium. The electrode may be coupled with a raise and swivel gantry 235. The raise and swivel gantry 235 may be a mechanical electrode mechanism that raises the electrode 230 (see FIG. 3), swivels the electrode 230, and lowers the electrode 230 (see FIG. 4) into a solvent 241 within the solvent receptacle 240. The solvent receptacle 240 may include a solvent 241. In some embodiments, the solvent may comprise any solvent that includes Ethylene glycol. In some embodiments, the solvent may be held at or near about room temperature. The raise and swivel gantry 235 may include a one or more of motors, actuators, gears, pulleys, solenoids, cables, etc. that can effectuate the movement of the electrode 230.

In some embodiments, an electrical potential is placed on the electrode 230 while the electrode is in contact with the molten salt (e.g., actinide bearing salt). In some embodiments, an electrical potential may not be required and the electrode 230 will merely be a conductor while the electrode is in contact with the molten salt. In some embodiments, the electric potential may be a direct current or an alternating current electrical potential. A second electrode may be in contact with the molten salt to complete (or ground) the circuit. The second electrode can be an electrode coupled with any portion of the chemical separation subsystem 200 or may be part of a vessel wall of the chemical separation subsystem 200. For example, the second electrode may be part of the vessel wall of the molten salt chemical separation channel 205 and/or the vessel wall of the molten salt loop conduit 220. The electric potential between the electrode 230 and the second electrode may produce or enhance an electrochemical reaction between fission products within the molten salt and the electrode 230. The electrochemical reaction causes fission products to plate on the electrode 230. In some embodiments, the electric potential between the electrodes may vary from as low as 0 volts to as high as 6 volts. The electric potential may vary in order to select which elements are expected to be plated on the electrode 230.

In some embodiments, the magnitude of the electric potential, the magnitude of the current applied to the electric potential, the composition of the molten salt, the type and composition of the fission products dissolved in the salt, and/or the material comprising the electrode 230 may determine the reactants that react with the electrode 230. Additionally or alternatively, in some embodiments, the frequency of an alternating electric potential, the frequency of the alternating current applied to the electric potential, the composition of the molten salt, and/or the material comprising the electrode 230 may determine the reactants that react with the electrode 230

In some embodiments, the raise and swivel gantry 235 may be disposed partially within the chemical separation chamber 260. In some embodiments, one or more of motors, actuators, gears, pulleys, solenoids, cables, etc. may be coupled with and/or part of the raise and swivel gantry 235. In some embodiments, the one or more of motors, actuators, gears, pulleys, solenoids, cables, etc. may be disposed external to the chemical separation chamber 260 that cause the raise and swivel gantry 235 to raise and/or swivel the electrode 230.

In some embodiments, the chemical separation chamber 260 may include a getter 250 that may include a getter plug. The getter may be used to remove gases from within the chemical separation chamber 260. The getter 250, for example, may include magnesium carbonate, depleted uranium, silver, or copper etc. In some embodiments, the getter may collect various chemicals, especially gasses such as tritium, hydrogen, deuterium, iodine, krypton, xenon, helium, etc. In some embodiments, the getter 250 may use a pneumatic or mechanical system to remove and/or replace the (potentially saturated) getter in order to pull out chemicals from the chemical separation chamber 260.

In some embodiments, the chemical separation chamber 260 may include a gaseous release port 255. The gaseous release port 255, for example, may collect gaseous products from the chemical separation chamber 260 such as, for example, krypton, xenon, iodine, helium, molybdenum, zirconium, etc.

FIG. 3 is a diagram of a chemical separation subsystem 200 of a molten salt reactor with the electrode 230 in a raised position within the chemical separation chamber 260 according to some embodiments. In this figure, the one or more of motors, actuators, gears, pulleys, solenoids, cables, etc. have been engaged to raise the raise and swivel gantry 235 such that the electrode 230 is not submersed within the molten salt and is not submersed within a solvent 241 in the solvent receptacle 240.

FIG. 4 is a diagram of a chemical separation subsystem 200 of a molten salt reactor with the electrode 230 in a lowered position and disposed within the solvent 241 in the solvent receptacle 240 according to some embodiments. In some embodiments, when the electrode 230 is in a lowered position and disposed, placed, or inserted into the solvent 241 within the solvent receptacle 240, the electric potential between the electrode 230 and the second electrode may be reversed and produce an electrochemical reaction between the fission products on the electrode and the solvent 241 within the solvent receptacle 240. In some embodiments, when the electrode 230 is in the lowered position and disposed within the solvent receptacle 240, the frequency or magnitude of the potential between the electrode 230 and the second electrode may be changed to produce an electrochemical reaction between the fission products on the electrode and the solvent 241 within the solvent receptacle 240. In some embodiments the fission products may be released, dissolved, and/or deposited into the solvent.

In some embodiments, either the first electrode or the second electrode may comprise an anode and the other electrode may comprise a cathode. In some embodiments, a third electrode may be included that may be a reference electrode. In some embodiments, a third electrode may be included the may be an additional anode or an additional cathode.

In some embodiments, the solvent receptacle 240 may be coupled with a solvent processing subsystem such as, for example, via a tube and/or a solenoid that allows the solvent 241 to flow from the solvent receptacle 240 to the solvent processing subsystem. In some embodiments, the fission products may be separated from the solvent and/or further processed.

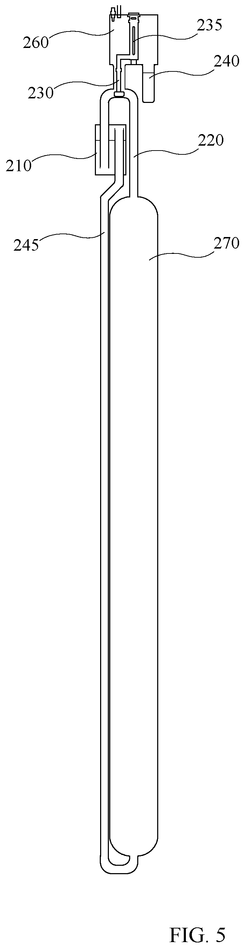

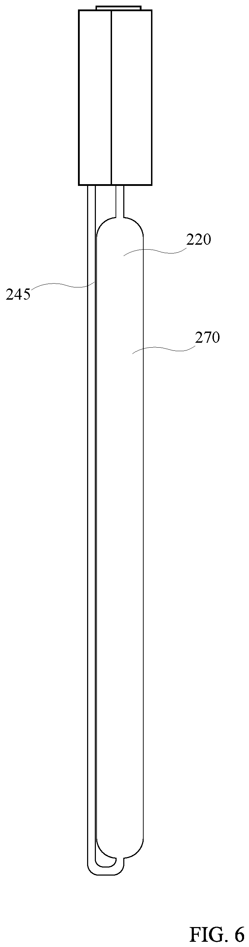

FIG. 5 is a diagram of a chemical separation subsystem 200 attached with the molten salt reactor 270 (e.g., reactor 102) according to some embodiments. FIG. 6 is another diagram of a chemical separation subsystem 200 attached with the molten salt reactor 270 according to some embodiments. In some embodiments, the chemical separation subsystem 200 may be coupled with the molten salt reactor 270 via the molten salt return conduit 245 and/or the molten salt loop conduit 220.

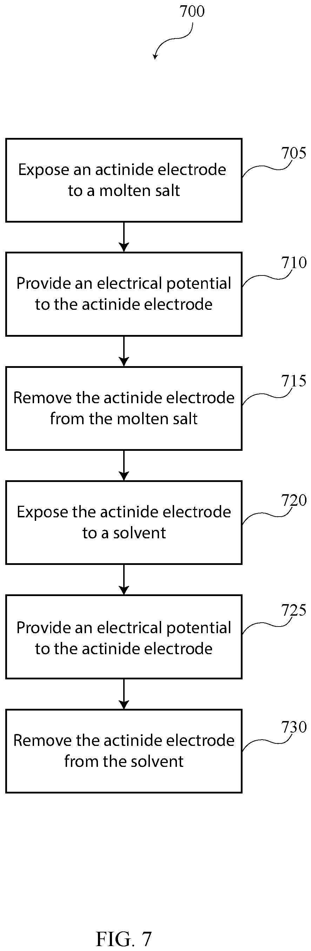

FIG. 7 is a flowchart representing a process 700 for using an electrode to remove fission products from a molten salt reactor according to some embodiments. At block 705 an electrode may be exposed to a molten salt. The electrode, for example, may include the electrode 230. The molten salt may include but not be limited to any molten salt described in this document.

At block 710 an electrical potential is provided to the electrode. The electrical potential, for example, may vary in voltage and/or frequency depending on the type of molten salts, the molten salt mixture, and/or the type of fission products desired to extract from the molten salt. The electric potential, for example, may be a potential between the electrode and a second electrode disposed elsewhere in the molten salt. The electric potential between the electrode and the second electrode produces an electrochemical reaction between fission products within the molten salt and the electrode. The electrochemical reaction causes fission products to be plated on the electrode.

At block 715 the electrode may be removed from the molten salt. This can be accomplished in any number of ways. For example, the electrode may be removed using a raise and swivel gantry. As another example, the electrode may be removed using one or more of motors, actuators, gears, pulleys, solenoids, etc. As another example, the electrode may be removed from the molten salt by removing the molten salt.

At block 720 the electrode may be exposed to a solvent. For example, the electrode can be moved to a solvent receptacle. As another example, the chamber where the electrode is disposed may be filled with a solvent after the molten salt has been removed.

At block 725 the electrode is exposed to an electrical potential. In some embodiments, the electrical potential provided while the electrode is disposed in the solvent may be reversed relative to the electrical potential provided at block 710. In some embodiments, the electrical potential, for example, may vary in voltage and/or frequency depending on the solvent composition and/or the type of fission products. The electric potential, for example, may be a potential between the electrode and a third electrode disposed elsewhere in the solvent. The electric potential between the electrode and the third electrode may produce an electrochemical reaction between fission products plated on the electrode such that the fission products are dissolved in the solvent.

At block 730 the electrode may be removed from the solvent.

The process 700 may be repeated any number of times. The process 700 may also include additional blocks or steps. In addition or alternatively, any number of blocks of the process 700 may be removed or deleted.

In some embodiments, an electrode may be held stationary within a chemical separation subsystem. Molten salt and solvent may alternately flow into the chemical separation subsystem as electrical potential on the electrode is correspondingly reversed to collect fission material from the molten salt and dissolve fission material in the solvent.

In some embodiments, a power source may be included that is configured to place an electrical potential on the electrode(s). The electric potential may produce an electrochemical reaction between electrode and the fission products within the molten salt or the electrode and the solvent. In some embodiments, the fission products are plated on the electrode when the electrode is placed or submersed within the molten salt receptacle.

In some embodiments, the molten salt comprises an actinide bearing salt, and wherein the electrode comprises a material that does not react with the actinides within the actinide bearing salt. In some embodiments, the molten salt comprises a fluoride salt or a chloride salt. In some embodiments, the electrode comprises an actinide.

In some embodiments, the chemical separation mechanism may also include a chemical separation chamber, wherein at least a portion of the electrode mechanism is disposed within the chemical separation chamber.

In some embodiments, the chemical separation chamber contains a noble gas.

In some embodiments, a mesh is used to collect precipitated particles within the solvent receptacle.

In some embodiments a secondary chamber may be used to perform chemical cleaning of the salts.

Unless otherwise specified, the term "substantially" means within 5% or 10% of the value referred to or within manufacturing tolerances. Unless otherwise specified, the term "about" means within 5% or 10% of the value referred to or within manufacturing tolerances.

Numerous specific details are set forth herein to provide a thorough understanding of the claimed subject matter. However, those skilled in the art will understand that the claimed subject matter may be practiced without these specific details. In other instances, methods, apparatuses or systems that would be known by one of ordinary skill have not been described in detail so as not to obscure claimed subject matter.

The system or systems discussed herein are not limited to any particular hardware architecture or configuration.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

## Claims

1. A chemical separation mechanism comprising:
a molten salt receptacle having a molten salt mixture disposed within the molten salt receptacle, the molten salt mixture comprising one or more molten salts and one or more fission products;
a first electrode (230);
a second electrode; and
an electrode mechanism coupled with the first electrode (230) and configured to secure the first electrode (230) in the molten salt receptacle such that the first electrode (230) is disposed within the molten salt mixture and an electrochemical reaction occurs between the first electrode (230) and one or more of the fission products in the molten salt mixture causing the one or more fission products to be plated on the first electrode (230) when an electrical potential is placed between the first electrode (230) and the second electrode.

2. The chemical separation mechanism according to claim 1, wherein the electrode mechanism comprises a raise and swivel gantry (235).

3. The chemical separation mechanism according to claim 1, wherein the electrode mechanism comprises a raise and slide electrode mechanism.

4. The chemical separation mechanism according to claim 1, further comprising a power source configured to place the electrical potential on the first electrode (230).

5. The chemical separation mechanism according to claim 1, wherein the molten salt mixture comprises an actinide bearing salt, and wherein the first electrode (230) does not react with the actinides within the actinide bearing salt.

6. The chemical separation mechanism according to claim 1, wherein the molten salt mixture comprises an actinide bearing salt.

7. The chemical separation mechanism according to claim 1, wherein the first electrode (230) comprises uranium.

8. The chemical separation mechanism according to claim 1, wherein the first electrode (230) comprises an actinide.

9. The chemical separation mechanism according to claim 1, further comprising a solvent receptacle (240) having a solvent (241) disposed in the solvent receptacle (240), wherein the electrode mechanism is further configured to move the first electrode (230) from the molten salt receptacle and dispose the first electrode (230) in the solvent receptacle (240) such that the first electrode (230) is dipped in the solvent (241) and a chemical reaction occurs resulting in one or more of the fission products plated on the first electrode (230) to be deposited into the solvent (241).

10. The chemical separation mechanism according to claim 1, wherein the molten salt mixture comprises a fluoride or chloride salt.

11. The chemical separation mechanism according to claim 1, wherein the second electrode is disposed within or is in contact with the molten salt mixture within the molten salt receptacle (240).

12. The chemical separation mechanism according to claim 9, further comprising a third electrode disposed within or in contact with the solvent (241) within the solvent receptacle (240).

13. The chemical separation mechanism according to claim 1, further comprising a chemical separation chamber (260) which encloses a noble gas.

14. The chemical separation mechanism according to claim 1, further comprising a chemical separation chamber (260) coupled with the molten salt receptacle, the chemical separation chamber (260) comprising a getter (250) configured to collect one or more gases.

15. A method comprising:
disposing a first electrode (230) to a molten salt mixture comprising one or more molten salts and one or more fission products;
disposing a second electrode in the molten salt mixture; and
providing an electrical potential between the first electrode (230) and the second electrode while the first electrode (230) is disposed in the molten salt mixture and the second electrode is disposed in the molten salt mixture such that an electrochemical reaction occurs between the first electrode (230) and one or more of the fission products in the molten salt mixture causing fission products to be plated on the first electrode (230).

## Patentansprüche

1. Chemischer Trennmechanismus, umfassend:
einen Salzschmelzenbehälter mit einer Salzschmelzenmischung, die innerhalb des Salzschmelzenbehälters angeordnet ist, wobei die Salzschmelzenmischung ein oder mehrere geschmolzene Salze und ein oder mehrere Spaltprodukte umfasst;
eine erste Elektrode (230);
eine zweite Elektrode und
ein Elektrodenmechanismus, der mit der ersten Elektrode (230) gekoppelt und konfiguriert ist, um die erste Elektrode (230) in dem Salzschmelzenbehälter derart zu befestigen, dass die erste Elektrode (230) innerhalb des Salzschmelzengemisches angeordnet ist und eine elektrochemische Reaktion zwischen der ersten Elektrode (230) und einem oder mehreren der Spaltprodukte in dem Salzschmelzengemisch stattfindet, die bewirkt, dass das eine oder die mehreren Spaltprodukte auf die erste Elektrode (230) plattiert werden, wenn ein elektrisches Potenzial zwischen der ersten Elektrode (230) und der zweiten Elektrode angelegt wird.

2. Chemischer Trennmechanismus nach Anspruch 1, wobei der Elektrodenmechanismus eine Hub- und Schwenkbrücke (235) umfasst.

3. Chemischer Trennmechanismus nach Anspruch 1, wobei der Elektrodenmechanismus einen Hub- und Gleitelektrodenmechanismus umfasst.

4. Chemischer Trennmechanismus nach Anspruch 1, ferner umfassend eine Stromquelle, die konfiguriert ist, um das elektrische Potenzial an der ersten Elektrode (230) anzulegen.

5. Chemischer Trennmechanismus nach Anspruch 1, wobei das Salzschmelzengemisch ein Actinoid-tragendes Salz umfasst, und wobei die erste Elektrode (230) nicht mit den Actinoiden innerhalb des Actinoid-tragenden Salzes reagiert.

6. Chemischer Trennmechanismus nach Anspruch 1, wobei das Salzschmelzengemisch ein Actinoid-tragendes Salz umfasst.

7. Chemischer Trennmechanismus nach Anspruch 1, wobei die erste Elektrode (230) Uran umfasst.

8. Chemischer Trennmechanismus nach Anspruch 1, wobei der Elektrodenmechanismus eine Hub- und Schwenkbrücke (230) umfasst.

9. Chemischer Trennmechanismus nach Anspruch 1, ferner umfassend einen Lösungsmittelbehälter (240) mit einem Lösungsmittel (241), das in dem Lösungsmittelbehälter (240) angeordnet ist, wobei der Elektrodenmechanismus ferner konfiguriert ist, um die erste Elektrode (230) aus dem Salzschmelzenbehälter zu bewegen und die erste Elektrode (230) in dem Lösungsmittelbehälter (240) anzuordnen, sodass die erste Elektrode (230) in das Lösungsmittel (241) getaucht wird und eine chemische Reaktion auftritt, die zu einem oder mehreren der Spaltprodukte führt, die auf der ersten Elektrode (230) plattiert wurden in das Lösungsmittel (241) abgeschieden werden.

10. Chemischer Trennmechanismus nach Anspruch 1, wobei das Salzschmelzengemisch ein Fluorid- oder Chloridsalz umfasst.

11. Chemischer Trennmechanismus nach Anspruch 1, wobei die zweite Elektrode innerhalb des Salzschmelzenbehälters (240) angeordnet ist oder mit dem Salzschmelzengemisch in Kontakt steht.

12. Chemischer Trennmechanismus nach Anspruch 9, ferner umfassend eine dritte Elektrode, die innerhalb oder in Kontakt mit dem Lösungsmittel (241) innerhalb des Lösungsmittelbehälters (240) angeordnet ist.

13. Chemische Trennvorrichtung nach Anspruch 1, ferner umfassend eine chemische Trennkammer (260), die ein Edelgas umschließt.

14. Chemischer Trennmechanismus nach Anspruch 1, ferner umfassend eine chemische Trennkammer (260), die mit dem Salzschmelzenbehälter gekoppelt ist, wobei die chemische Trennkammer (260) einen Getter (250) umfasst, der konfiguriert ist, um ein oder mehrere Gase zu sammeln.

15. Verfahren, das Folgendes umfasst:
Anordnung einer ersten Elektrode (230) zu einer Salzschmelze, die ein oder mehrere Salzschmelzen und ein oder mehrere Spaltprodukte umfasst;
Anordnung einer zweiten Elektrode in der Salzschmelze; und
Bereitstellung eines elektrischen Potenzials zwischen der ersten Elektrode (230) und der zweiten Elektrode, während die erste Elektrode (230) in dem Salzschmelzengemisch angeordnet ist und die zweite Elektrode in dem Salzschmelzengemisch angeordnet ist, sodass eine elektrochemische Reaktion zwischen der ersten Elektrode (230) und einem oder mehreren der Spaltprodukte in dem Salzschmelzengemisch auftritt, die dazu führt, dass Spaltprodukte auf die erste Elektrode (230) plattiert werden.

## Revendications

1. Mécanisme de séparation chimique comprenant :
un réceptacle de sel fondu présentant un mélange de sel fondu disposé au sein du réceptacle de sel fondu, le mélange de sel fondu comprenant un ou plusieurs sels fondus et un ou plusieurs produits de fission ;
une première électrode (230) ;
une deuxième électrode ; et
un mécanisme d'électrode couplé à la première électrode (230) et configuré pour fixer la première électrode (230) dans le réceptacle de sel fondu de telle sorte que la première électrode (230) soit disposée à l'intérieur du mélange de sel fondu et qu'une réaction électrochimique se produise entre la première électrode (230) et un ou plusieurs des produits de fission dans le mélange de sel fondu provoquant le placage des un ou plusieurs produits de fission sur la première électrode (230) lorsqu'un potentiel électrique est placé entre la première électrode (230) et la deuxième électrode.

2. Mécanisme de séparation chimique selon la revendication 1, dans lequel le mécanisme d'électrode comprend un portique de soulèvement et de pivotement (235).

3. Mécanisme de séparation chimique selon la revendication 1, dans lequel le mécanisme d'électrode comprend un mécanisme d'électrode à soulèvement et à coulissement.

4. Mécanisme de séparation chimique selon la revendication 1, comprenant également une source d'alimentation configurée pour placer le potentiel électrique sur la première électrode (230) .

5. Mécanisme de séparation chimique selon la revendication 1, dans lequel le mélange de sel fondu comprend un sel contenant des actinides, et dans lequel la première électrode (230) ne réagit pas avec les actinides au sein du sel contenant des actinides.

6. Mécanisme de séparation chimique selon la revendication 1, dans lequel le mélange de sel fondu comprend un sel contenant des actinides.

7. Mécanisme de séparation chimique selon la revendication 1, dans lequel la première électrode (230) comprend de l'uranium.

8. Mécanisme de séparation chimique selon la revendication 1, dans lequel la première électrode (230) comprend un actinide.

9. Mécanisme de séparation chimique selon la revendication 1, comprenant également un réceptacle de solvant (240) présentant un solvant (241) disposé dans le réceptacle de solvant (240), dans lequel le mécanisme d'électrode est également configuré pour déplacer la première électrode (230) du réceptacle de sel fondu et disposer la première électrode (230) dans le réceptacle de solvant (240) de telle sorte que la première électrode (230) soit plongée dans le solvant (241) et qu'une réaction chimique se produise, entraînant le dépôt dans le solvant (241) d'un ou plusieurs produits de fission plaqués sur la première électrode (230).

10. Mécanisme de séparation chimique selon la revendication 1, dans lequel le mélange de sel fondu comprend un sel de fluorure ou de chlorure.

11. Mécanisme de séparation chimique selon la revendication 1, dans lequel la seconde électrode est disposée au sein du mélange de sel fondu ou en contact avec celui-ci au sein du réceptacle de sel fondu (240).

12. Mécanisme de séparation chimique selon la revendication 9, comprenant également une troisième électrode disposée au sein du solvant (241) ou en contact avec celui-ci au sein du récipient de solvant (240).

13. Mécanisme de séparation chimique selon la revendication 1, comprenant également une chambre de séparation chimique (260) qui renferme un gaz noble.

14. Mécanisme de séparation chimique selon la revendication 1, comprenant également une chambre de séparation chimique (260) couplée au réceptacle de sel fondu, la chambre de séparation chimique (260) comprenant un getter (250) configuré pour collecter un ou plusieurs gaz.

15. Procédé comprenant :
la disposition d'une première électrode (230) sur un mélange de sel fondu comprenant un ou plusieurs sels fondus et un ou plusieurs produits de fission ;
la disposition d'une seconde électrode dans le mélange de sel fondu ; et
la fourniture d'un potentiel électrique entre la première électrode (230) et la deuxième électrode pendant que la première électrode (230) est disposée dans le mélange de sel fondu et la deuxième électrode est disposée dans le mélange de sel fondu de telle sorte qu'une réaction électrochimique se produise entre la première électrode (230) et un ou plusieurs des produits de fission dans le mélange de sel fondu provoquant le placage des produits de fission sur la première électrode (230).
